# EUROPEAN PATENT APPLICATION

(11) **EP 3 426 005 A1**
(43) Date of publication of application: **09.01.2019**
(21) Application number: 18170430.5
(22) Date of filing: 02.05.2018
(51) Int. Cl.: H05B 33/08

(54) **LED TUBE WITH VOLTAGE BOOSTING CIRCUIT**

(30) Priority: 07.07.2017 CN 201710549807
(71) Applicant: Xiamen PVTECH Co., Ltd., Xiamen Fujian (CN)
(72) Inventor: LU, FUXING, Xiamen, Fujian (CN); LIU, RONGTU, Xiamen, Fujian (CN); LAI, RUICHA, Xiamen, Fujian (CN)
(74) Representative: Lang, Christian

(57) **Abstract**

A LED tube with the voltage boosting circuit, wherein the LED tube includes a LED base, a circuit board configured on the LED base, and a lampshade configured on the LED base to cover the circuit board, at least 50 LED lamp beads connected in series are configured on the circuit board, the LED lamp beads is electronically connected with the circuit board, the circuit board includes a driving module, the driving module has a high voltage input and low current output to excite the LED lamp beads, and the driving module make a current of the LED lamp beads consistent via a voltage boosting circuit. The efficient of LED lamp beads is improved. The ripple is avoided, and the stroboflash is reduced.

## Description

### Background of the Invention

### 1. Field of the Invention

The disclosure relates to a LED tube and, more particularly, relates to a LED tube with a voltage boosting circuit.

### 2. Description of the Prior Art

With the fast development of Light Emitting Diodes (LED), lamps are developed from incandescent lamps to LED tubes with less carbon emission, which is energy-saving and environment-friendly.

LED lamp beads of a LED tube are usually provided with a low voltage and a high current. Consequently, if one LED lamp bead is failed, all LED lamp bead cannot work. Since a low voltage and a high current is provided, the number of a group of the LED lamp beads in one LED tube is limited, which is 15 to 20 in average. Consequently, to increase the number, multiple groups of LED tubes are needed. For example, the configuration of 90 V and 150 mA are provided to 5 groups of LED tubes, one group of 28 mA, one group of 32 mA, one group of 27 mA and so on, which are different. As a result, the cost of conventional LED tubes is high when the specification of the LED tubes is updated. The output current is high. Thus, the current efficiency is low, and the cost of the voltage output module is high.

### Summary of the Invention

According to an aspect of the invention, a LED tube with a voltage boosting circuit is provided the LED tube includes a LED base, a circuit board configured on the LED base, and a lampshade configured on the LED base to cover the circuit board, wherein at least 50 LED lamp beads connected in series are configured on the circuit board, the LED lamp beads is electronically connected with the circuit board, the circuit board includes a driving module, the driving module has a high voltage input and low current output to excite the LED lamp beads, and the driving module makes a current of the LED lamp beads consistent via a voltage boosting circuit.

As a result, each of the excited LED lamp beads has a same color temperature, a same service life. The luminous efficacy is improved, the current conversion is low, and the cost of the voltage output module is low.

These and other objectives of the present invention will no doubt become obvious to those of ordinary skill in the art after reading the following detailed description of the preferred embodiment that is illustrated in the various figures and drawings.

### Brief Description of the Drawings

These and other features, aspects and advantages of the invention will become better understood with regard to the following embodiments and accompanying drawings.
FIG. 1 is a block diagram showing a driving module in an embodiment.
FIG. 2 is a schematic diagram showing a LED tube with a voltage boosting circuit in an embodiment.
FIG. 3 is a section view showing a LED tube with a voltage boosting circuit in an embodiment.
FIG. 4 is a section view showing a LED tube with a voltage boosting circuit in an embodiment.

### Detailed Description

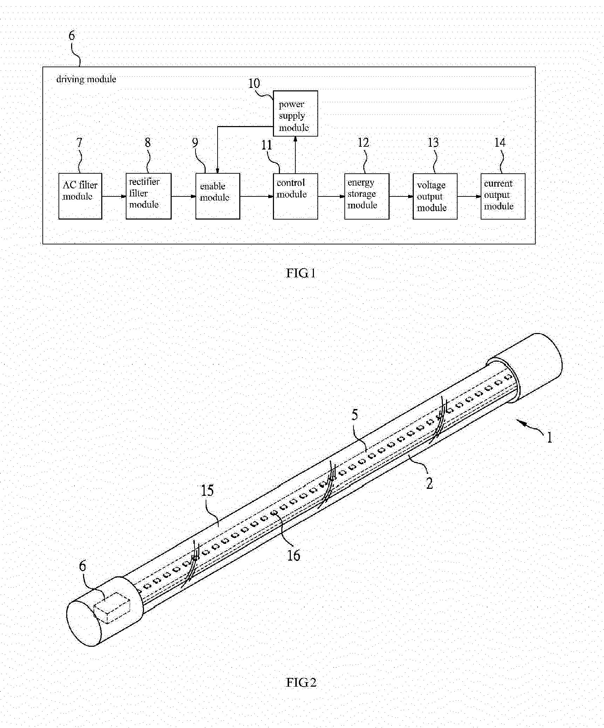

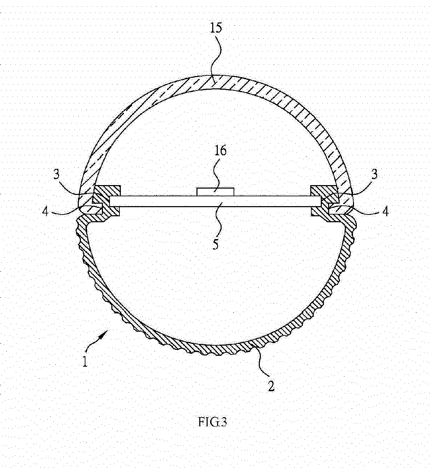

FIG. 1 is a block diagram showing a driving module in an embodiment. FIG. 2 is a schematic diagram showing a LED tube with a voltage boosting circuit in an embodiment. FIG. 3 is a section view showing a LED tube with a voltage boosting circuit in an embodiment. In the embodiment, a fitting recess 3 is formed inside a LED base 2 for fastening with a circuit board 5. An external heat dissipation seat 15 is configured at the outer of the LED base 2. An accommodating space 150 is formed in the LED tube for accommodating the LED base 2. The number of the LED lamp beads 14 configured on the circuit board 5 is 150 as an example.

Please refer to FIG.1 to FIG. 3, a LED tube with a voltage boosting circuit is provided. The LED tube 1 includes a LED base 2, a circuit board 5, a driving module 6 and a lampshade 15.

Please refer to FIG.1 to FIG. 3. The driving module 6 is a constant-current type. The circuit board 5 is disposed on the LED base 2. At least 50 LED lamp beads 14 connected in series are configured on the circuit board 5. The driving module 6 is electronically connected to the circuit board 5. The LED lamp beads 14 are excited with a high voltage and a low current. A lampshade 15 is configured on the LED base 2 to shield the circuit board 5.

In the embodiment, the constant-current driving module 12 is configured at any one or both sides of the LED tube according to requirements. The driving module 12 includes an alternating current (AC) filter module 7, a rectifier filter module 8, an enable module 9, a power supply module 10, a control module 11, an energy storage module 12, a voltage output module 13, and a current output module 14.

Please refer to FIG.1 to FIG. 3. In an embodiment, the rectifier filter module 8 includes a plurality of diodes, a plurality of capacitors, and a plurality of inductors. The enable module 9 includes a plurality of the resistors, a plurality of the Metal-Oxide-Semiconductor (MOS), a plurality of diodes, and a plurality of capacitors. The power supply module 10 includes a plurality of diodes, a plurality of voltage regulator tubes, a plurality of capacitors, and a potential transformer. The control module 11 includes a plurality of resistors, a plurality of capacitors, and a plurality of diodes. The energy storage module 12 includes a potential transformer, a MOS, a plurality of the resistors. The voltage output module 13 includes a plurality of the resistors. The current output module 14 includes a plurality of resistors, a plurality of diodes, and a plurality of capacitors.

A LED tube 1 in an embodiment is shown in FIG. 2 and FIG. 3. A fitting recess 3 is formed inside a LED base 2 for fastening with a circuit board 5. A fastening slot 4 for fastening the lampshade 15 is configured at an outer side of the LED base 2.

Please refer to FIG.1 to FIG. 3. In the embodiment, the number of the LED lamp beads 14 configured on the circuit board 5 is 150. The driving module 6 includes an AC filter module 7, a rectifier filter module 8, an enable module 9, a power supply module 10, a control module 11, an energy storage module 12, a voltage output module 13, and a current output module 14.

Please refer to FIG.1 to FIG. 3. In an embodiment, the rectifier filter module 8 includes a plurality of the diodes, a plurality of capacitors and inductors. The enable module 9 includes a plurality of the resistors, a plurality of MOS, diodes and a plurality of capacitors. The power supply module 10 includes diodes, a voltage regulator tube, capacitors and a potential transformer. The control module 11 includes a plurality of the resistors, a plurality of capacitors, and diodes. The energy storage module 12 includes a potential transformer, a MOS, a plurality of resistors. The voltage output module 13 includes a plurality of resistors . The current output module 14 includes a plurality of resistors, diodes, and capacitors.

Please refer to FIG.1 to FIG. 3. When the grid potential of the MOS of the enable module 9 is larger than a minimum enablement voltage, the MOS is conducted. With the current limit via a resistor of the enable module 9, the capacitor of the enable module 9 is charged. When a cross voltage of a capacitor of the enable module 9 is larger than a threshold voltage of the control module 11, the control module 11 is enabled. Via a resistor of the control module 11, a MOS of the energy storage module 12 is driven to switch on/off. Then, the duty cycle of the MOS is changed to control the potential transformer of the energy storage module 12 and the energy storage time of the inductor. The voltage of the output end of the LEDs is adjusted.

Please refer to FIG.1 to FIG. 3. In the stable charging stage, when the control module 11enters the operation state, the control module 11 outputs a voltage signal, with the current limit via a resistor of the enable module 9, the MOS of the enable module 9 is driven to enter into a saturation conduction state. At the moment, the grid potential of another MOS of the enable module 9 is pulled down via the above MOS. The MOS which is changed from the conducted state to the cut off state stops the charging to the capacitors of the enable module 9. The charging of the control module 11 is changed. The auxiliary winding have the power supply to the capacitor of the enable module 9 via the current limit of the resistor and the capacitor of the power supply module 10, the rectification of the diodes, and the voltage stabilization of the voltage regulator tube.

Please refer to FIG.1 to FIG. 3. In the constant voltage state, after entering in the operation state, the voltage is divided to another resistor via the resistors of the voltage output module 13. After filtered, the current value sample voltage is obtained and transmitted to an internal testing end of the control module 11. When the voltage is higher than an internal reference voltage, the control module 11 reduces the conduction time of the MOS. Otherwise, the control module 11 increases the conduction time of the MOS.

Please refer to FIG.1 to FIG. 3. In the constant current state, after entering in the operation state, by measuring the voltage drop between two ends of the resistors of the current output module 14, and after the filtering via the resistors and capacitors, the voltage is output to the internal testing end of the control module 11. When the voltage is higher than the internal reference voltage, the control module 11 reduces the conduction time of the MOS. Otherwise, the control module 11 increases the conduction time of the MOS.

Since the power supply is larger than 400V, the efficient is improved, and the heat dissipation is reduced. The lamp beads are connected in series in a manner of high voltage and low current, the current transmission is consistent. The consistency and the efficient of the lamp beads are improved. The ripple is avoided, and the stroboflash is reduced. The LED lamp beads connected in series are configured on the substrate . With the constant current driving module, a high voltage is input and a low current is output to make each of the stimulated LED lamp beads have a same color temperature, a same service life, a high luminous efficiency, a low current conversion, and a low capacitors cost.

In an embodiment, the driving module 6 has a high voltage input and a low current output. When the DC voltage is higher than 400V, via the voltage boosting circuit, the current becomes consist and the output voltage is increased. The filtering is performed after the voltage reduction. Then, the low current is output to the circuit board 5 and excites the LED lamp beads 14. Each of the excited LED lamp beads has a same color temperature, a same service life. The luminous efficacy is improved, the current conversion is low, and the cost of the voltage output module is low.

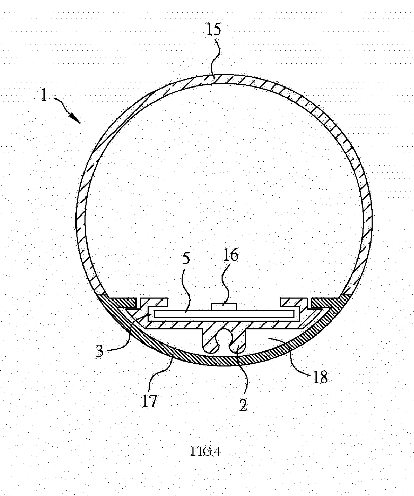

FIG. 4 is a section view showing a LED tube with a voltage boosting circuit in an embodiment. A LED tube with a voltage boosting circuit is provided. The LED tube 1 includes a LED base 2, a circuit board 5, a driving module 6, and a lampshade 15. The circuit board 5 is configured on the LED base 2. In an embodiment, at least 50 LED lamp beads 14 connected in series are configured on the circuit board 5. The driving module 6 is electronically connected to the circuit board 5. The high voltage input and low voltage output excite the LED lamp beads 14. In an embodiment, a lampshade 15 is configured on the LED base 2 to cover the circuit board 5.

Please refer to FIG. 1 to FIG. 4, in the operation state, the voltage is divided to another resistor via the resistors of the voltage output module 13. After filtered, the current value sample voltage is obtained and transmitted to an internal testing end of the control module 11. When the voltage is higher than an internal reference voltage, the control module 11 reduces the conduction time of the MOS. Otherwise, the control module 11 increases the conduction time of the MOS.

Please refer to FIG.1 to FIG. 4. In the operation state, by measuring the voltage drop between two ends of the resistors of the current output module 14, and after the filtering via the resistors and capacitors, the voltage is output to the control module 11 the internal testing end. When the voltage is higher than the internal reference voltage, the control module 11 reduces the conduction time of the MOS. Otherwise, the control module 11 increases the conduction time of the MOS.

Please refer to FIG.1 to FIG. 4. With the power supply of an AC power, a pulsation DC voltage is generated via the AC filter module 7 and the rectifier filter module 8. The enable module 9 is connected with an output end of the rectifier filter module 8 via a resistor of the enable module 9, and the voltage is divided to another MOS via other resistors of the enable module 9 to provide an enable voltage.

Please refer to FIG.1 to FIG. 4. When the grid potential of the MOS of the enable module 9 is larger than a minimum enablement voltage, the MOS is conducted. With the current limit via a resistor of the enable module 9, the capacitor of the enable module 9 is charged.

Please refer to FIG.1 to FIG. 4. When a cross voltage of a capacitor of the enable module 9 is larger than the threshold voltage of the control module 11, the control module 11 is enabled. Via a resistor of the control module 11, a MOS of the energy storage module 12 is driven to switch on/off. Then, the duty cycle of the MOS is changed to control the potential transformer of the energy storage module 12 and the energy storage time of the inductor. Then, the voltage of the output end of the LEDs is adjusted.

Please refer to FIG.1 to FIG. 4. In the stable charging stage, when the control module 11enters the operation state, the control module 11 outputs a voltage signal, and with the current limit via a resistor of the enable module 9, the MOS of the enable module 9 is driven to enter into a saturation conduction state. At the moment, the grid potential of another MOS of the enable module 9 is pulled down via the above MOS. The MOS which is changed from the conducted state to the cut off state stops the charging to the capacitors of the enable module 9.

Please refer to FIG.1 to FIG. 4. The auxiliary winding have the power supply to the capacitor of the enable module 9 via the current limit of the resistor and the capacitor of the power supply module 10, the rectification of the diodes, and the voltage stabilization of the voltage regulator tube. Please refer to FIG.1 to FIG. 4. 150 LED lamp beads connected in series are configured on the substrate 11. With the high voltage input and low voltage output, each of the excited LED lamp beads has a same color temperature. With the power supply larger than 400V, the efficient is improved, and the heat dissipation is reduced.

With the voltage boosting circuit of the driving module, the LED lamp beads have a consistent current. The 150 LED lamp beads connected in series are configured on the circuit board 5. Via the driving module 6 with the high voltage input and low voltage output, each of the excited LED lamp beads has a same color temperature, a same service life. The luminous efficacy is improved, the current conversion is low, and the cost of the voltage output module is low.

Although the invention has been disclosed with reference to certain embodiments thereof, the disclosure is not for limiting the scope. Persons having ordinary skill in the art may make various modifications and changes without departing from the scope of the invention. Therefore, the scope of the appended claims should not be limited to the description of the embodiments described above.

## Claims

1. A LED tube with a voltage boosting circuit, wherein the LED tube includes a LED base, a circuit board configured on the LED base, and a lampshade configured on the LED base to cover the circuit board, wherein at least 50 LED lamp beads connected in series are configured on the circuit board, the LED lamp beads is electronically connected with the circuit board, the circuit board includes a driving module, the driving module has a high voltage input and low current output to excite the LED lamp beads, and the driving module makes a current of the LED lamp beads consistent via a voltage boosting circuit.

2. The LED tube with the voltage boosting circuit according to claim 1, **characterized in that** the driving module includes an AC filter module receiving an external AC power and a rectifier filter module, the rectification a filtering generates a pulsation DC voltage, since an enable module is connected with an output end of the rectifier filter module and enables an voltage, and the voltage of the enable module is larger than a threshold voltage of the control module, the control module is enabled, the control module drives an energy storage module to switch on and switch off to change a duty cycle of an energy storage module, an energy storage time of the energy storage module is changed to control a voltage of the output end of the LED lamp beads, the control module outputs a voltage signal to the enable module, the power supply of the control module is changed to that the auxiliary winding has a voltage stabilization via a power supply module to charge the enable module.

3. The LED tube with the voltage boosting circuit according to claim 2, **characterized in that** a sample voltage is obtained when the voltage output module is sampled after the filtering, and the sample voltage is transmitted to an internal testing end of the control module, when the voltage is higher than the internal reference voltage, the conduction time of the control module is reduced, the voltage drop between ends of the current output module after the filtering is output to the internal testing end of the control module, when the voltage is higher than the internal reference voltage, the conduction time of the control module is reduced, and a low current is output to the substrate and excites the LED lamp beads .

4. The LED tube with the voltage boosting circuit according to claim 1, **characterized in that** the driving module has a high voltage input and a low current output, and the DC voltage is higher than 400V.

5. The LED tube with the voltage boosting circuit according to claim 1, **characterized in that** a fitting recess is formed inside the LED base for fastening with the circuit board.

6. The LED tube with the voltage boosting circuit according to claim 1, **characterized in that** a fastening slot for fastening the lampshade is configured at an outer side of the LED base.

7. The LED tube with the voltage boosting circuit according to claim 1, **characterized in that** the LED base further includes an external heat dissipation seat, and the external heat dissipation seat includes an accommodating space for accommodating the LED base.
